# DEMANDE DE BREVET EUROPEEN

(11) **EP 1 445 846 A1**
(43) Date de publication de la demande: **11.08.2004**
(21) Numéro de dépôt: 04354001.2
(22) Date de dépôt: 19.01.2004
(51) Int. Cl.: H02H 3/33

(54) **Dispositif d'interruption comportant une protection différentielle et une protection thermique**

(30) Priorité: 04.02.2003 FR 0301228
(71) Demandeur: Schneider Electric Industries SAS, 92500 Rueil-Malmaison (FR)
(72) Inventeur: Dumont, Didier Schneider Electric Industries SAS, 38050 Grenoble cedex 09 (FR); Broquié, Yves Schneider Electric Industries SAS, 38050 Grenoble cedex 09 (FR); Tian, Simon Schneider Electric Industries SAS, 38050 Grenoble cedex 09 (FR)
(74) Mandataire: Tripodi, Paul

(57) **Abrégé**

Un dispositif d'interruption tel qu'un interrupteur différentiel comporte une protection différentielle comprenant des moyens de mesure à tore (4) entourant au moins deux conducteurs principaux connectés en série avec des contacts principaux (2) et des moyens de déclenchement (3, 6) pour déclencher l'ouverture desdits contacts principaux lorsqu'un courant différentiel (Idp, Ids) dépasse une valeur prédéterminée, et une protection thermique ayant des moyens de détection thermique changeant d'état électrique en fonction de la température et coopérant avec la protection différentielle pour déclencher l'ouverture desdits contacts principaux. Les moyens de détection thermique (14, 14A, 14B, 14C) sont connectés sur au moins un même conducteur principal (1) entre une partie (15) en amont et une partie (16) en aval dudit tore, le changement d'état électrique desdits moyens de détection thermique permettant une dérivation de courant (Ith) à l'extérieur du tore lorsqu'un seuil de température est dépassé.

## Description

### DOMAINE TECHNIQUE

L'invention concerne un dispositif d'interruption comportant :
- une protection différentielle comprenant des moyens de mesure à tore entourant au moins deux conducteurs principaux destinés à être connectés en série avec des contacts principaux et des moyens de déclenchement connectés à au moins un enroulement secondaire des moyens de mesure pour déclencher l'ouverture desdits contacts principaux lorsqu'un courant différentiel dépasse une valeur prédéterminée, et
- une protection thermique ayant des moyens de détection thermique changeant d'état électrique en fonction de la température et coopérant avec la protection différentielle pour déclencher l'ouverture desdits contacts principaux.

### ETAT DE LA TECHNIQUE

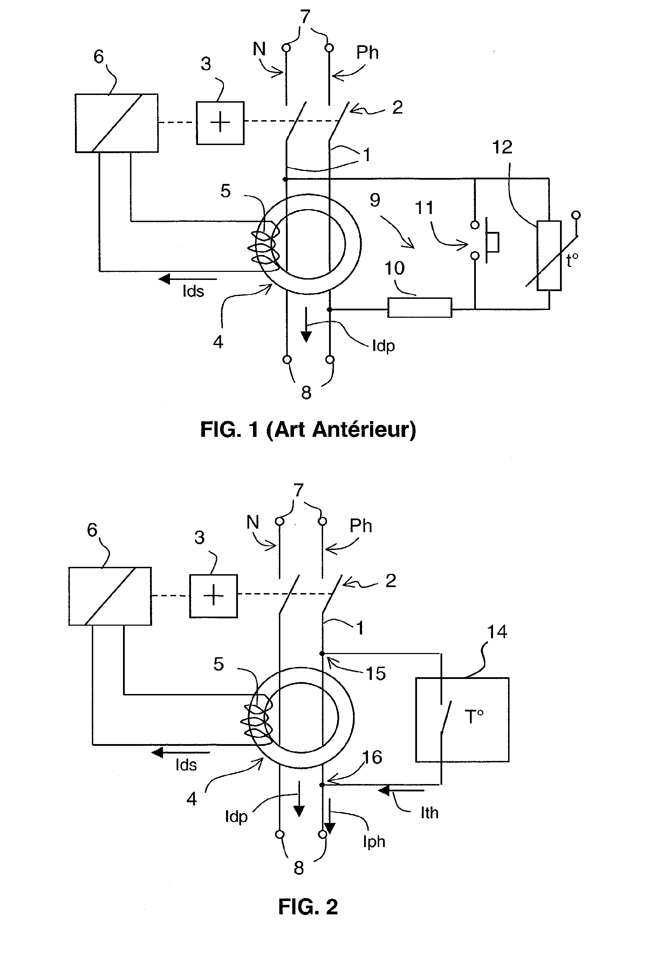

Des interrupteurs différentiels connus, comme celui représenté sur la figure 1, comportent des conducteurs de puissance principaux 1 connectés en série avec des contacts principaux 2 actionnés par un mécanisme d'actionnement 3 de la fermeture et de l'ouverture des contacts. Un tore de mesure 4 entoure les conducteurs principaux et fournit sur un enroulement secondaire 5 un signal différentiel secondaire Ids représentatif d'un courant différentiel primaire Idp modélisé par une somme vectorielle ou instantanée des courants circulant dans les conducteurs principaux. Le signal différentiel Ids est appliqué sous forme de courant ou de tension à un relais 6 de déclenchement pour actionner le mécanisme 3 lorsque le signal différentiel secondaire Ids ou le courant différentiel primaire Idp dépassent des valeurs prédéterminées. Généralement, les interrupteurs différentiels comportent au moins deux bornes 7 pour un raccordement en amont notamment pour une arrivée de phase ph et de neutre N et des bornes de sortie 8 en aval pour un départ.

Les interrupteurs différentiels sont souvent utilisés pour alimenter plusieurs départs de distribution électrique où chaque départ est protégé par un disjoncteur ou des fusibles. Lorsque plusieurs départs sont parcourus par des courants élevés la somme de ces courants traverse l'interrupteur différentiel. Dans ce cas, un courant important traverse l'interrupteur différentiel et un échauffement peut se produire si ledit courant dépasse une valeur nominale de fonctionnement.

Des interrupteurs différentiels comportant des systèmes de protection thermiques sont décrits dans les demandes de brevet FR2754949 et WO95/26586. Ces systèmes utilisent un circuit test 9 de la protection différentielle comprenant une résistance 10 et un bouton poussoir 11. Un détecteur thermique 19 connecté en parallèle sur le bouton 11 crée un courant de déclenchement dans le primaire du tore de mesure lorsqu'une température augmente. Ce courant est généré par une tension entre un premier conducteur principal et un second conducteur principal.

Cependant, Dans les systèmes connus la tension utilisée pour la protection thermique peut présenter des perturbations qui ne sont pas compatible avec un fonctionnement sûr. En effet, des surtensions fréquentes sur un réseau de distribution électrique peuvent perturber le fonctionnement ou endommager des systèmes de protection thermique. L'ajout de circuits de protection contre des variations de tension rendrait le système coûteux et volumineux pour un interrupteur de faible dimension. De plus, ces systèmes sont connectés au réseau et ne permettent pas de garantir un bon isolement entre les conducteurs et de passer facilement des tests diélectriques.

### EXPOSE DE L'INVENTION

L'invention a pour but un dispositif d'interruption comportant une protection différentielle et une protection thermique améliorée évitant les problèmes de tension de réseau.

Dans un dispositif d'interruption selon l'invention, les moyens de détection thermique sont connectés sur au moins un même conducteur principal entre une première partie en amont dudit tore et une seconde partie en aval dudit tore, le changement d'état électrique desdits moyens de détection thermique permettant une dérivation de courant à l'extérieur du tore d'un courant circulant dans ledit conducteur principal lorsqu'un seuil de température est dépassé.

Dans un mode de réalisation préférentiel, les moyens de détection thermique comportent un contact électrique actionné par un élément cloquant.

De préférence, les moyens de détection thermique ont une impédance ou une résistance inférieure à 0,1 ohms lorsqu'un seuil de température est dépassé.

De préférence, le seuil de température est supérieur à 60 degrés Celsius.

De préférence, les moyens de détection thermique sont disposés à proximité du tore.

Avantageusement, les moyens de détection thermique sont disposés solidairement au tore.

Avantageusement, les moyens de détection thermique sont collés au tore.

Dans un autre mode de réalisation, les moyens de détection thermique sont disposés à proximité dudit au moins un conducteur principal.

Dans un mode de réalisation particulier triphasé ou tétra polaire, le dispositif d'interruption comporte trois moyens de détection thermique disposés en dérivation sur trois conducteurs principaux.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif d'interruption différentielle de l'état de la technique ;
- la figure 2 représente un schéma d'un dispositif d'interruption différentielle selon un premier mode de réalisation de l'invention ;
- la figure 3 représente un schéma d'un dispositif d'interruption différentielle selon un second mode de réalisation de l'invention ;
- la figure 4 représente une vue en coupe d'un dispositif d'interruption différentielle selon un mode de réalisation de l'invention ;
- les figures 5 et 6 illustrent des courbes de température détectées par des détecteur de température dans des dispositifs d'interruption selon des modes de réalisation de l'invention.

### DESCRIPTION DETAILLEE DE MODES DE REALISATION PREFERES

Dans un dispositif d'interruption selon un mode de réalisation de l'invention représenté sur la figure 1, un détecteur thermique 14 est connecté sur au moins un conducteur principal 1 entre une première partie 15 en amont d'un tore 4 et une seconde partie 16 en aval dudit tore. Un changement d'état électrique dudit détecteur thermique vers un état passant permet une dérivation d'un courant Ith à l'extérieur du tore 4 d'un courant Iph circulant dans ledit conducteur principal 1 lorsqu'un seuil de température est dépassé.

Le seuil de température peut être défini, notamment, en fonction d'un courant nominal de fonctionnement, de la classe de température du dispositif d'interruption, et/ou du lieu où est disposé le détecteur thermique. Le seuil de température est de préférence supérieur à 60 degrés Celsius. Par exemple, une valeur de seuil peut se situer entre 80 et 120 degrés Celsius.

Dans l'état passant, le détecteur thermique a, de préférence, une impédance ou une résistance inférieure à 0,1 ohms, par exemple 0,05 ohms, lorsqu'un seuil de température est dépassé. Avantageusement, le détecteur thermique comporte un contact électrique actionné par un élément cloquant. Le rapport d'impédance entre le détecteur thermique et le conducteur principal et suffisant pour dérivé un courant différentiel de déclenchement. De plus, l'impédance inductive du tore 4 participe à la dérivation du courant à l'extérieur du tore. Le détecteur thermique peut comporter un dispositif de limitation du courant qui le traverse pour le protéger.

La protection thermique du dispositif d'interruption peut tenir compte de l'ensemble des effets thermiques générant des échauffements, en premier lieu le courant dans les conducteurs principaux lorsqu'il dépasse une valeur nominale de fonctionnement mais aussi des échauffements dus aux contacts, au serrage des bornes de raccordement et/ou à la température environnante.

Ainsi, un dispositif d'interruption selon un mode de réalisation de l'invention a un fonctionnement à propre courant indépendant de la tension du réseau. Les perturbations du réseau telles que les surtensions, dues notamment à des charges ou à de la foudre, n'ont plus d'effet directs sur le comportement de la protection thermique. De plus, l'isolement électrique entre les bornes du dispositif d'interruption est total et des essais de tenue diélectrique ne sont pas perturbés.

Avantageusement, le détecteur thermique est disposé à proximité du tore pour avoir une bonne image thermique et des liaisons courtes entre des connexions sur les parties amont et aval sur le conducteur principal. De préférence, le détecteur est disposé solidairement du tore. Par exemple, le détecteur 14 peut être collé au tore par des colles résistant à la température et ayant une bonne conduction thermique. Avantageusement, le détecteur peut être disposé au centre du tore pour garantir une bonne image thermique.

Le détecteur thermique 14 peut aussi être disposé à proximité ou sur le conducteur principal 1 pour bénéficier de manière plus efficace de l'effet thermique se produisant sur les contacts et les bornes de connexion 7 et/ou 8.

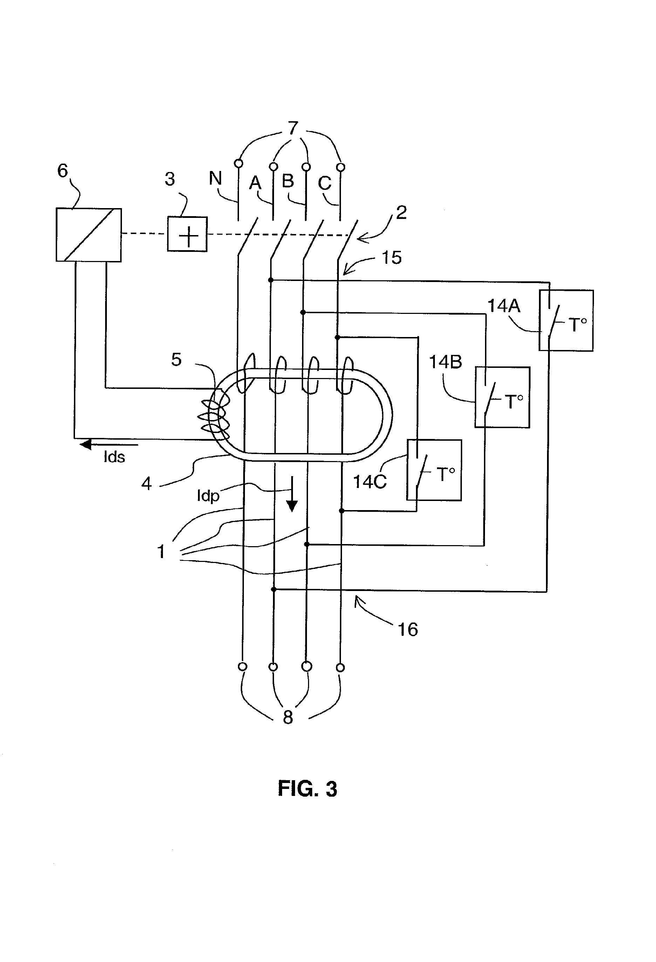

La figure 3 montre un dispositif d'interruption tétrapôlaire comportant quatre conducteurs principaux 1, dont un pour le neutre N et trois pour les phases A, B et C. Sur cette figure les conducteurs principaux passent dans le tore 4 en faisant chacun une boucle correspondant à une spire d'un enroulement primaire.

Dans ce mode de réalisation, trois détecteurs thermiques 14A, 14B et 14C sont connectés en dérivation sur les conducteurs principaux 1 de phase respectivement A, B et C entre une partie amont 15 et une partie aval 16.

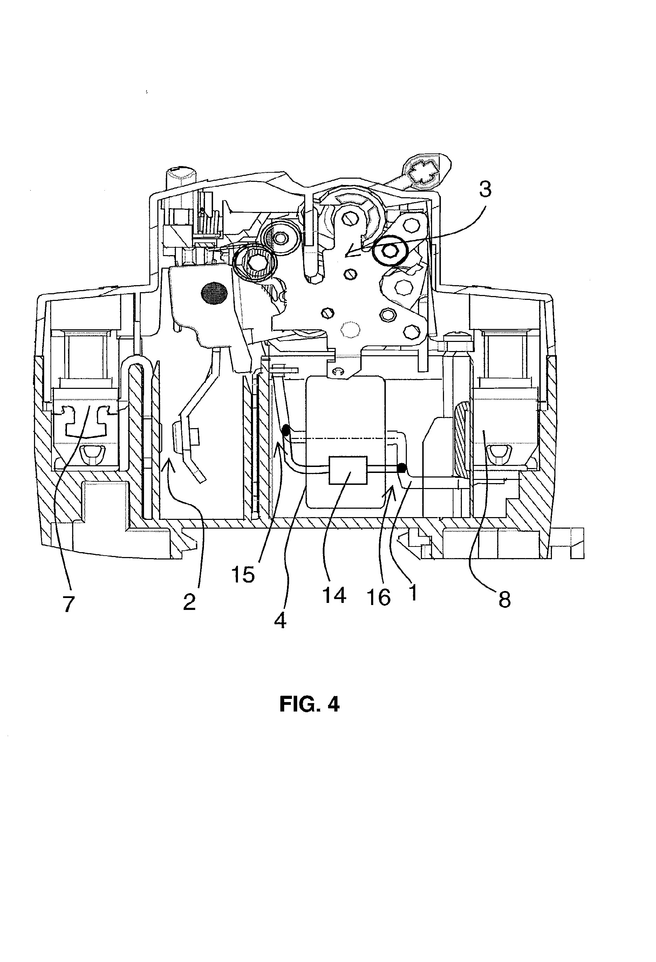

Sur la figure 4, une vue en coupe montre un exemple de disposition d'un détecteur thermique 14 dans un dispositif d'interruption tel qu'un interrupteur différentiel.

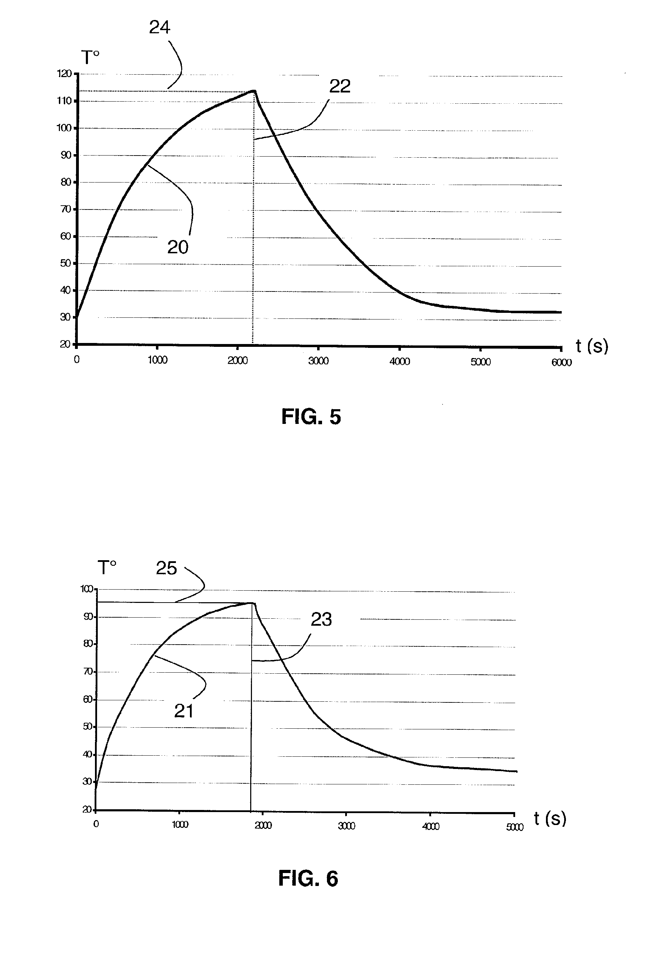

Les figures 5 et 6 illustrent des courbes 20 et 21 de température dans deux dispositifs d'interruption de calibre différents captées par un détecteur thermique 14 en fonction du temps, et des instants de déclenchement 22 et 23 pour des seuils de température prédéterminés 24 et 25, correspondant respectivement à des températures de 112 et 93 degrés Celsius. Après les déclenchements de l'ouverture de contacts, aux instants 22 et 23, la température décroît puis le détecteur de température change d'état électrique. Si le détecteur comporte un interrupteur électrique, par exemple un système cloquant, le contact s'ouvre lorsque la température baisse.

Le dispositif d'interruption est en particulier un interrupteur différentiel de type modulaire pouvant être monté sur un support en forme de rail mais d'autres interrupteurs différentiels peuvent être concernés en tant que dispositifs d'interruption selon l'invention.

## Revendications

1. Dispositif d'interruption comportant :
- une protection différentielle comprenant des moyens de mesure à tore (4) entourant au moins deux conducteurs principaux (1, N, A, B, C) destinés à être connectés en série avec des contacts principaux (2) et des moyens de déclenchement (3, 6) connectés à au moins un enroulement secondaire (5) des moyens de mesure pour déclencher l'ouverture desdits contacts principaux lorsqu'un courant différentiel (Idp, Ids) dépasse une valeur prédéterminée, et
- une protection thermique ayant des moyens de détection thermique changeant d'état électrique en fonction de la température et coopérant avec la protection différentielle pour déclencher l'ouverture desdits contacts principaux,
dispositif **caractérisé en ce que** les moyens de détection thermique (14, 14A, 14B, 14C) sont connectés sur au moins un même conducteur principal (1) entre une première partie (15) en amont dudit tore et une seconde partie (16) en aval dudit tore, le changement d'état électrique desdits moyens de détection thermique permettant une dérivation de courant (Ith) à l'extérieur du tore d'un courant (Iph) circulant dans ledit conducteur principal lorsqu'un seuil de température est dépassé.

2. Dispositif selon la revendication 1 **caractérisé en ce que** les moyens de détection thermique (14) comportent un contact électrique actionné par un élément cloquant.

3. Dispositif selon l'une des revendications 1 ou 2 **caractérisé en ce que** les moyens de détection thermique (14) ont une impédance ou une résistance inférieure à 0,1 ohms lorsqu'un seuil de température est dépassé.

4. Dispositif selon l'une quelconque des revendications 1 à 3 **caractérisé en ce que** le seuil de température est supérieur à 60 degrés Celsius.

5. Dispositif selon l'une quelconque des revendications 1 à 4 **caractérisé en ce que** les moyens de détection thermique (14) sont disposés à proximité du tore (4).

6. Dispositif selon l'une quelconque des revendications 1 à 4 **caractérisé en ce que** les moyens de détection thermique (14) sont disposés solidairement au tore (4).

7. Dispositif selon la revendication 6 **caractérisé en ce que** les moyens de détection thermique (14) sont collés au tore (4).

8. Dispositif selon l'une quelconque des revendications 1 à 4 **caractérisé en ce que** les moyens de détection thermique (14) sont disposés à proximité dudit au moins un conducteur principal (1).

9. Dispositif selon l'une quelconque des revendications 1 à 8 **caractérisé en ce qu'**il comporte trois moyens de détection thermique (14A, 14B, 14C) disposés en dérivation sur trois conducteurs principaux (1).
